(19) Europäisches Patentamt
European Patent Office
Office européen des brevets

(11) Veröffentlichungsnummer: **0 189 923 B1**

(12) **EUROPÄISCHE PATENTSCHRIFT**

(45) Veröffentlichungstag der Patentschrift: **30.12.92**

(51) Int. Cl.[5]: **G06F 15/40**

(21) Anmeldenummer: **86101216.9**

(22) Anmeldetag: **30.01.86**

# (54) Verfahren zum Anlegen und Abfragen von Gruppen aus einem Speicher.

(30) Priorität: **31.01.85 DE 3503284**

(43) Veröffentlichungstag der Anmeldung:
**06.08.86 Patentblatt 86/32**

(45) Bekanntmachung des Hinweises auf die Patenterteilung:
**30.12.92 Patentblatt 92/53**

(84) Benannte Vertragsstaaten:
**AT BE CH DE FR GB IT LI NL SE**

(56) Entgegenhaltungen:
**US-A- 3 197 742**

**D. GRIES: "The Science of Programming", 1981, Seiten 203-205, Springer Verlag, New York, US**

**ICL TECHNICAL JOURNAL, Band 1, Nr. 3, November 1979, Seiten 265-279, Stevenage, Herts, GB; V.A.J. MALLER: "The content addressable file store-CAFS"**

(73) Patentinhaber: **Rischbeck, Elmar**
**Theresienstrasse 48**
**W-8000 München 2(DE)**

(72) Erfinder: **Rischbeck, Elmar**
**Theresienstrasse 48**
**W-8000 München 2(DE)**

(74) Vertreter: **Fleuchaus, Leo, Dipl.-Ing. et al**
**Fleuchaus & Wehser Melchiorstrasse 42**
**W-8000 München 71(DE)**

**EP 0 189 923 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Anlegen und Abfragen von Informationsgruppen im Speicher einer Rechenanlage mit einem Leitwerk, einem Rechenwerk und einem Speicher.

Bei der elektronischen Datenverarbeitung tritt häufig das Problem auf, Informationen auf Datenträgern zu speichern und anschließend mit Programmen nach Gesichtspunkten auszuwerten, die sich auf logische Gruppen innerhalb der gespeicherten Daten beziehen; Beispiele dafür sind Warenwirtschaftssysteme mit bestimmten Warengruppen, Adress-Schlüssel und andere mehr.

Im Stand der Technik werden für diese Zwecke häufig komplexe Systeme eingesetzt, die auf Datenbanken oder auch index-sequentiellen Dateien aufgebaut sind. Derartige Systeme sind teuer und können von Kleinbetrieben aus Kostengründen oft nicht eingesetzt werden.

Ein weiterer Weg besteht darin, die Daten in einer sequentiellen Datei und streng aufsteigender Anordnung des Ordnungsbegriffes (z.B. der Warengruppennummer) anzuordnen, um so die Abfrageprogramme weniger komplex werden zu lassen. Dieses Verfahren macht jedoch Änderungen der gespeicherten Information (durch Zu- und Abgänge) schwierig.

Ein anderes Verfahren, das auch ein Gruppencode von Daten abfragt, ist in der US-PS 3 197 742 angesprochen. Dabei wird auf spezielle Informationen, z.B. die alphabetische Reihenfolge des Kundennamens oder eine Ziffersequenz abgefragt. Nachteilig ist bei diesem Verfahren, daß man die Datenstruktur speziell so aufbauen muß, daß Gruppencodes entsprechend ihrer Bedeutung abgespeichert werden müssen. Man kann sie nicht einfach mit anderen Daten verschlüsseln.

Die vorliegende Erfindung stellt sich daher die Aufgabe, ein Verfahren der eingangs genannten Art anzugeben, das bei geringem Programmaufwand und einfacher Möglichkeit der gespeicherten Daten eine flexible Abfrage nach verschiedenen logischen Parametern erlaubt.

Diese Aufgabe wird durch die im Anspruch 1 angegebene Erfindung gelöst. Ausgestaltungen der Erfindung sind in den abhängigen Ansprüchen gekennzeichnet.

Die Erfindung schlägt vor, die einzelnen Datensätze in einer sequentiellen Datei so anzuordnen, daß die Datensätze einer logischen Gruppe direkt aufeinanderfolgen, die logischen Gruppen selbst aber in beliebiger Reihenfolge erscheinen. Ist eine zusätzliche logische Gruppe aufzunehmen, braucht diese daher nur am Ende der bereits bestehenden Daten angefügt zu werden. Dieses Merkmal ist von besonderem Wert bei Speichermedien, die nicht beliebig gelöscht werden können, z.B. optische Plattenspeicher. Als Gruppenparameter kann bei dem vorgeschlagenen Verfahren jede Ziffernfolge (Zahl) herangezogen werden. Ein besonderer Gruppencode ist bei dem erfindungsgemäßen Verfahren nicht erforderlich. Zur Kennzeichnung der Gruppe dient der ganzzahlige Teil eines Quotienten aus dem Zahlenfeld und einem frei wählbaren Divisor. Das Auswerteprogramm zur Erstellung von Listen, die entsprechend den Gruppen angeordnet sind, wird bei dieser Wahl der Anordnung der Datensätze besonders einfach. Zur Ausgabe einer Gruppenübersicht genügt ein einziger Durchgang durch die sequentielle Datei mit nur wenigen Abfragebefehlen.

Ausführungsbeispiele der Erfindung werden nun anhand der beigefügten Zeichnungen erläutert, in denen

- Fig. 1 A-G Ablaufdiagramme eines ersten Ausführungsbeispieles zeigen, das in Tabelle 1 dargestellt ist, und
- Fig. 2 A-D Ablaufdiagramme eines zweiten Ausführungsbeispieles zeigen, das in Tabelle 3 dargestellt ist.

Ein erstes Ausführungsbeispiel des Verfahrens nach der Erfindung ist durch das BASIC Programm REM 1 dargestellt, dessen Programmliste in Tabelle 1 wiedergegeben ist und dessen Ablaufdiagramm die Fig. 1 A bis G zeigen.

Dieses Ausführungsbeispiel ist am Beispiel von Warengruppen mit ihren Preisen, ihrer Menge und ihrem Gesamtpreis dargestellt. Selbstverständlich sind auch andere Gruppen, z.B. zu wissenschaftlichen Zwecken, möglich. Die Gruppen sind in einer einzigen Datei in sequentieller, jedoch nicht linearer Reihenfolge der Gruppen gespeichert.

Bei diesem Ausführungsbeispiel wird als Ordnungsparameter eine mindestens fünfstellige Warennummer verwendet, deren drei letzten Ziffern für die Definition der Warengruppe unberücksichtigt blieben. Die Ware STUHL mit der Warennummer 22410 gehört somit zur Warengruppe 22, die Ware DISKETTE mit der Warennummer -62307 zur Warengruppe -62.

Die einzelnen zu einer Warengruppe gehörigen Waren sind in der sequentiellen Datei fortlaufend hintereinander angeordnet. Ein Beispiel für eine derartige Datei ist in Tabelle 5 wiedergegeben.

Später zugefügte Elemente einer früher eingegebenen Gruppe können auch am Ende der sequentiellen Datei und getrennt von den übrigen Gruppenelementen angefügt werden, um ein neues Ordnen der schon bestehenden Datei zu vermeiden. In diesem Fall werden dann bei der Abfrage des Lagerbestandes zwei gleich bezeichnete Gruppenausgabefelder entstehen.

Innerhalb des zur Kennzeichnung der Gruppen verwendeten Parameters braucht keine Ordnung (z.B. aufsteigend) aufrechterhalten zu werden, d.h. die Artikelnummern einer Gruppe können in beliebiger Reihenfolge erscheinen. Das Verfahren zum Anlegen und Abfragen von Informationsgruppen umfaßt somit folgende, durch die Positionsnummern des Ablaufdiagramms gekennzeichnete Teilschritte:

1. Die Anlage einer sequentiellen Datei durch Eingabe von Artikelnummern-Gruppen im Minusbereich, Plus-Null-Bereich und Plusbereich in nicht linearer Reihenfolge.
(Position 1000 bis 1150)

2. Die Abfrage nach einem bestimmten Artikel
(Position 2000 bis 2145)

3. Die Abfrage der Bestandsmeldung aus dieser Datei mit nicht linear angelegten Gruppen im Minusbereich, Plus-Null-Bereich und Plusbereich.
(Position 3000 bis 3290)

4. Die Abfrage in beliebiger Reihenfolge der Artikelnummer-Gruppen mit Zwischensummen der abgefragten Gruppen aus dieser Datei im Minusbereich, Plus-Null-Bereich und Plusbereich mit Ausgabe z.B. der Endsumme aller abgefragten DM-Gruppen.
(Position 5000 bis 5400)

5. Die Abfrage in beliebiger Reihenfolge der vom Programm erzeugten DM-Umsatzgruppen mit Zwischensummen der Gruppen aus dieser Datei im Minusbereich, Plus-Null-Bereich und Plusbereich mit Ausgabe der Endsumme aller abgefragten DM-Gruppen.
(Position 6000 bis 6300)

zu 1.: Obere und untere Grenzen der Gruppen, d.h. die Anzahl der Dezimalstellen, die eine Gruppe enthält, werden vom Programmierer festgelegt. Ein Gruppenschlüssel ist nicht nötig.
Sprünge bei der Anlage der sequentiellen Datei, z.B. von der Gruppe -10 auf die Gruppe 0, +11, +92 und wieder zurück auf die Gruppe - 23 sind möglich.
Bei der Eingabe werden beispielhaft Gruppen im Bereich von -99 bis +99 und der Gruppe +0 sowie Artikelnummern von -99999 bis 99999 gewählt. Die dort gebildeten Gruppen können aus je 1000 Elementen bestehen.

zu 3.: Abfrage der Bestandsmeldung. Durch einen einzigen Befehl werden die in der Datei angelegten Gruppen wie üblich mit den dazugehörigen Gruppen-Summen ausgegeben und zum Schluß die Gesamtsumme erzeugt.
Neu ist, daß die Gruppen für die Bestandsmeldung nicht linear angelegt sein müssen. Die Gruppen werden im Minusbereich, Plus-Null-Bereich und Plusbereich ausgegeben. Sprünge, die bei der Anlage der Datei vorgegeben wurden, spielen dabei eine Rolle. Wurden die Gruppen z.B. in der Reihenfolge +90, -90, +0, +20, -21 in die Datei eingegeben, so werden sie auch so ausgegeben.

zu 4.: Die Gruppen werden von einer Datei im Minusbereich, Nullbereich und Plusbereich abgefragt in beliebiger Reihenfolge.
Die Summe der abgefragten Gruppen wird ausgegeben, und zum Schluß wird die Summe aller abgefragten Gruppen ausgegeben. Die Daten müssen nicht sortiert sein. Doppelte Daten werden ausgegeben.

zu 5.: Eine zweite Gruppenabfrage wird von den gespeicherten DM-Werten der jeweiligen Artikel gebildet. Eine Obergrenze oder Untergrenze der Gruppen besteht nicht. (Den Bereich bestimmt der Programmierer).
Fragt man z.B. die gespeicherten DM-Werte im Bereich von -201.000.00 DM bis -201.999.00 DM ab, so erhält man alle DM-Werte in diesem Bereich. Auch hier müssen die gespeicherten DM-Werte vorher nicht sortiert werden. Doppelte DM-Werte werden ausgegeben. Die Stellen hinter dem Komma werden vom Programmierer festgelegt.

Tabelle 2 A zeigt das Ergebnis der Abfrage der Datei nach Tabelle 5 entsprechend dem Teilschritt 3, wenn der gesamte Lagerbestand ausgegeben werden soll, sowie entsprechend dem Teilschritt 4, wenn die Wertsumme der abgefragten Warengruppen festgehalten werden soll. Aus Tabelle 2 A ist ersichtlich, daß die einzelnen Warengruppen in derselben Reihenfolge ausgegeben werden, wie sie in der sequentiellen Datei angeordnet sind.

Tabelle 2 B zeigt das Ergebnis der Abfrage der Datei nach Tabelle 5 entsprechend dem Teilschritt 5, die einzelne bei der Abfrage einzugebende Umsatzgruppen ausdruckt, beispielsweise die Umsatzgruppe von DM 2000 bis DM 2999.

Einzelheiten der Verarbeitungsschritte für die oben erwähnten Funktionen des Programms REM 1 werden nun im folgenden anhand der Tabelle 1 und der Ablaufdiagramme in den Fig. 1 A bis 1 G erläutert, in denen die folgenden Abkürzungen verwendet sind:

AG = Ausgabe
EG = Eingabe
LZ = Leerzeile.

In den Programmzeilen 10 bis 230 des Programms REM 1, die Fig. 1 A entsprechen, wird der Benutzer aufgefordert, durch einen Auswahlcode eine der dort angezeigten Funktionen auszuwählen.

Die Programmzeilen 1000 bis 1150 und Fig. 1 B beziehen sich auf das Anlegen bzw. die Bereicherung der sequentiellen Datei, wie sie in Tabelle 5 dargestellt ist. Dazu fragt das Programm nach Artikelnummer, Preis und Bestandsmenge und wird abgeschlossen, wenn als Artikelnummer der Wert 00000 eingegeben wird. Bei dieser Eingabeart muß der Benutzer also darauf achten, daß Artikel, die zu gleichen Warengruppen gehören, hintereinander eingegeben werden.

Die Programmzeilen 2000 bis 2145 und Fig. 1 C zeigen die Abfrage der sequentiellen Datei nach einem bestimmten Artikel, dessen Artikelnummer eingegeben wird. Bei dieser Abfrage wird die gesamte sequentielle Datei Satz für Satz ausgelesen, bis der gewünschte Artikel erscheint oder bis das Ende der Datei erreicht ist; im letztgenannten Fall wird dann der Hinweis ausgegeben, daß dieser Artikel nicht gespeichert ist.

Die Programmzeilen 3000 bis 3290 und die Fig. 1 D, 1 E betreffen die Ausgabe des Lagerbestands für alle gespeicherten Artikelgruppen und stellen ein Kernstück der hier beschriebenen Erfindung dar. Es werden die folgenden Variablen verwendet:

A$ = Artikelnummer
B$ = Artikelbezeichnung
D = Menge
E = Preis
GESUM = Gesamtsumme des Lagerbestandes
SUM = Summe des Warenbestands einer Artikelgruppe
Z$ = Artikelnummer des unmittelbar zuvor verarbeiteten Datensatzes (ist bei Beginn der Verarbeitung = 00000)
B = nummerische Bezeichnung der Warengruppe, die aus den beiden hochstelligen Ziffern der fünfstelligen Artikelnummer erzeugt wird, wobei das Vorzeichen beachtet bleibt. (vgl. Programmzeilen 3090 bis 3140)
C = Code der Warengruppe des unmittelbar vorher verarbeiteten Datensatzes

Die entscheidende Programmzeile ist 3160, in der abgefragt wird, ob die Warengruppe B des gerade verarbeiteten Datensatzes gleich der Warengruppe C des unmittelbar vorher verarbeiteten Datensatzes ist. Wenn ja, werden der Eintrag dieses Datensatzes in den Programmzeilen 3220 bis 3225 aufgelistet und in den Programmzeilen 3230 und 3240 die Summen gebildet sowie bei Programmzeile 3050 die Schleife zum Einlesen eines neuen Datensatzes (bei 3070) wieder durchlaufen. Im anderen Fall wird die Warengruppe abgeschlossen, bei Programmzeile 3180, die Kennzeile für diese Warengruppe gedruckt, die Summe SUM für die Warengruppe gelöscht und ein erneuter Datensatz gelesen bzw. das Programm beendet, wenn alle Datensätze in der sequentiellen Datei gelesen wurden.

Diese einfache Schleife zur Abfrage des gesamten sequentiellen Datensatzes ermöglicht die Ausgabe aller Warengruppen in übersichtlicher Weise. Ein vorheriges Sortieren der sequentiellen Datei nach dem Warencode ist nicht erforderlich, so daß auch wenig Verarbeitungszeit für die Ausführung des Programmes notwendig ist.

Die Programmzeilen 5000 bis 5400 stellen die Funktion dar "Abfrage nach Warengruppen". Hier wird im Gegensatz zur Funktion "Lager und Bestand" die gewünschte Warengruppe eingegeben (Programmzeile 5060), anschließend werden in gleicher Weise wie im Programmlagerbestand die Gruppenbezeichnung B aus den beiden hochstelligen Ziffern der Artikelnummer mit Berücksichtigung des Vorzeichens ermittelt (Programmzeilen 5100 bis 5160) und anschließend jeder ausgelesene Datensatz auf das Vorliegen dieser Warengruppe verglichen (Programmzeile 5170). Wenn die gesamte sequentielle Datei durchlaufen ist (Programmzeile 5171), wird die Summe SUM für diese Warengruppe ausgedruckt (Programmzeile 5220) und bei Programmzeile 5240 gefragt, ob weitere Warengruppen abgefragt werden sollen. Wenn nein, wird die Gesamtsumme GESUM für alle Warengruppen ausgedruckt und das Programm abgeschlossen.

In ähnlicher Weise arbeitet der Programmteil in den Zeilen 6000 bis 6300 bzw. Fig. 1 G, indem jedoch statt der Warengruppe die Umsatzgruppe anzugeben ist (Programmzeile 6060). Aus der eingegebenen Umsatzgruppe, z.B. der Zahl 3000, wird dann ein Suchparameter W ermittelt, indem der eingegebene Wert durch 1000 dividiert und nur der ganzzahlige Wert das Ergebnisses berücksichtigt wird (Programmzeile 6075). Bei negativen Quotienten wird die um 1 kleinere ganze Zahl als Suchparameter verwendet (Programmzeile 6090). Für die in der sequentiellen Datei gespeicherten Artikel wird dann der Umsatz SU aus Menge und Preis ermittelt, ebenfalls durch 1000 dividiert und die ganze Zahl als Vergleichsparameter in der Abfrage der Programmzeile 6150 gebildet. Artikel mit übereinstimmenden Vergleichparametern der Umsatzgruppe, die in dem Beispiel bei Eingabe 3000 zwischen 3000 und 3999 liegen, werden anschließend ausgedruckt und die Summen der Gruppe gebildet, wenn die gesamte Datei durch laufen ist. Werden weitere Umsatzgruppen abgefragt, eröffnet das Programm die Abfrageschleife erneut (Programmzeile 6050).

Bei dieser Abfrage kann die Umsatzgruppe in einfacher Weise anders definiert werden, wenn bei der Division andere Werte als 1000 ausgewählt werden. Außerdem brauchen bei dieser Art der Abfrage die einzelnen Umsätze nicht gruppenweise hintereinander folgend in der sequentiellen Datei aufgezeichnet zu sein.

Tabelle 3 und die Fig. 2 A bis 2 D zeigen ein weiteres Ausführungsbeispiel der Erfindung, bei dem die einzelnen Gruppen nur durch positive (und nicht durch negative) Parameter bestimmt sind. Auch dieses Ausführungsbeispiel ist auf Warengruppen mit einzelnen Artikelnummern ausgerichtet, die hier aber keine negativen Werte annehmen können. Ähnlich dem ersten Ausführungsbeispiel werden bei dem Programm XLAG des zweiten Ausführungsbeispiels in einem ersten Teil (Programmzeile 10 bis 230; Fig. 2 A) die einzelnen Funktionen des Programms zur Auswahl angezeigt. In diesem Fall sind jedoch die Funktionen "Ausgabe einer Warengruppe" und "Ausgabe einer Umsatzgruppe" nicht dargestellt.

In einem zweiten Programmteil (Programmzeile 1000 bis 1150; Fig. 2 B) wird wieder die Eingabe in die sequentielle Datei beschrieben, die entweder neu eröffnet oder erweitert werden kann. Datensätze, die zur gleichen Gruppe gehören (z.B. Waren der gleichen Warengruppe), müssen hier wieder hintereinander eingegeben werden.

Ein dritter Programmteil (Programmzeilen 2000 bis 2145; Fig. 2 C) betrifft die Abfrage der sequentiellen Datei nach einem bestimmten Datensatz, hier also nach einem bestimmten Artikel.

Der vierte Programmteil (Programmzeilen 3000 bis 3290; Fig. 2 D) erzeugt den Lagerbestand, der wieder, wie im vorherigen Ausführungsbeispiel, entsprechend Warengruppen dargestellt wird, wobei die einzelnen Warengruppen in der gleichen Reihenfolge erscheinen, wie sie in die sequentielle Datei eingegeben werden. Als wesentlicher Unterschied zum vorherigen Ausführungsbeispiel ist hier daraufhinzuweisen, daß der Gruppenparameter nicht aus den beiden hochstelligen Ziffern der Artikelnummer incl. des Vorzeichens ermittelt wird, sondern durch Division der Artikelnummer durch den Wert 1000 und Übernahme der dann verbleibenden ganzen Zahl (Programmzeile 3170). Der Gruppenparameter B, der so ermittelt wird, wird dann in Programmzeile 3180 wieder mit dem Gruppenparameter C des unmittelbar vorher verarbeiteten Datensatzes verglichen, um entweder die Angaben des gerade verarbeiteten Datensatzes unter der gleichen Gruppe aufzulisten, wenn die beiden Parameter gleich sind, oder die Gruppe abzuschließen, wenn die beiden Parameter unterschieden sind.

Durch die Beschränkung auf positive Gruppenparameter (bzw. Artikelnummern) kann hier das Abfrageprogramm für die Gruppendarstellung in noch einfacherer Weise erfolgen als beim Programm REM 1.

Die übrigen Funktionen des Programmteils "Lagerbestand" im Programm XLAG entsprechen dem früher erläuterten Programm REM 1 bezüglich der Summe für die einzelnen Warengruppen und der Gesamtsumme für den Lagerbestand. Somit kann das Programm XLAG in der folgenden Weise zusammengefaßt werden:

1. Es wird eine sequentielle Datei im Plusbereich angelegt.
(Programmzeilen 1000 bis 1150)
2. Abfrage nach bestimmten Artikelnummern
(Programmzeilen 2000 bis 2145)
3. Abfrage der Bestandsmeldung von der sequentiell angelegten Datei.
(Programmzeilen 3000 bis 3290)

zu 1.: Hier wird vom Programmierer nur die Anzahl der Dezimalstellen der Artikelnummer festgelegt, die eine Gruppe enthalten soll. In diesem Programm ist 1000 gewählt. Mit geringem Aufwand kann der Anwender dies festlegen.
Sprünge bei der Anlage, z.B. von der Gruppe 10 auf die Gruppe 17000, 0 und wieder zurück auf die Gruppe 5 sind möglich.

zu 3.: Durch einen einzigen Befehl (Zeile 3180) werden die in der Datei angelegten Gruppen abgefragt und zum Schluß die Gesamtsumme erzeugt.
Tabelle 4 zeigt ein Beispiel für eine derartige Abfrage.

In allen dargestellten Bereichen sind die Gruppen im positiven Bereich dargestellt. Das Konzept ist aber auch für den negativen Bereich übertragbar.

Tabelle 4 ist ein Beispiel der Anwendung der Anlage und Abfrage von Gruppen von einer Datei in nicht linearer Form.

Es wird jetzt möglich sein, zum Beispiel in den Filialen einer Handelsfirma, z.B. der Firma A in X-Stadt, mittels Lesestift, EAN-Code und Heimcomputer dem Kunden die Rechnung auszudrucken, die Abverkäufe zu speichern und an die Zentrale in Y-Stadt über Datentelefon an die Großanlage einer Datei weiterzuleiten.

Zur Weiterleitung der Daten EANF wird dem EAN-Code die jeweilige Filialnummer, Gebietsnummer hinzugefügt in der Form

```
EANF = 6 980 23 2456 0000000000000 + EAN

6980    23    245   008535    057304
|       |     |     |
|       |     |     EAN-Code
|       |     |
|       |     Filiale in Y-Stadt
|       |
|       Zentrale in Y-Stadt der Firma A
|
Firma A in X-Stadt
```

Die Zentrale in Y-Stadt kann unter Abfrage der Lieferantennummer (Gruppe) und der Artikelnummern die Gesamtabgänge aller Filialen des jeweiligen Lieferanten ermitteln. Nehmen wir als Beispiel bestimmte Waren, z.B. Backoblaten einer Zulieferfirma B. Hier kann jetzt exakt der Abverkauf pro Tag der Zulieferfirma in den verschiedenen Backoblatengrößen ermittelt werden. Dies ist bei Weihnachtsartikeln (Saisonartikeln) von Bedeutung, da hier das Kaufverhalten sich von Woche zu Woche stark verändert. Hat der Filialleiter zuviel geordert, so muß er die Backoblaten ein ganzes Jahr auf Lager halten (totes Kapital), hat er zuwenig geordert, nimmt er Umsatzeinbußen in Kauf.

In der Zentrale in Y-Stadt hat nun der Einkäufer bei der Disposition eine Entscheidungshilfe anhand der vorliegenden täglichen Abverkäufe und mittels eines eigens entwickelten Programms, das den Abverkauf des Vorjahres in diesem Zeitraum im Vergleich setzt. Hat der Lieferant (bzw. die Handelsagentur) eine EDV-Anlage (z.B. einen Personalcomputer), so kann die Bestellung direkt per Datentelefon weitergeleitet werden und dort per Drucker dem Auslieferungslager übermittelt werden oder bei kleineren Bestellungen seinem Auslieferungslager (bzw. Spedition) am Ort (Y-Stadt) übermitteln. Hat dieser auch einen Personalcomputer und Drucker, kann der zeitraubende Weg über die Post vermieden werden.

Verzögerungen, die durch Engpässe (z.B. bei der Post) und Fehler, die durch mündliche und schriftliche Übertragung der Daten stattfinden, entfallen. Diese Art der Abwicklung kaufmännischer Vorgänge ist zeit- und kostensparend.

Dabei spielt es keine Rolle, wenn eine Warengruppe aus dem Sortiment aussortiert wird oder ein neuer Lieferant dazu kommt, da die Gruppen nicht linear angelegt sein müssen. So ist eine hausinterne Artikelnummerbezeichnung überflüssig, der EAN-Code reicht aus.

Diebstähle größeren Ausmaßes fallen sofort auf.

Diese Art des Abverkaufs und der Dispositionierung konnten sich im Lebensmittelbereich bisher nur Großhandelsfirmen leisten.

Durch die Anlage und Abfrage von Gruppen von einer Datei in nicht linearer Reihenfolge wäre dies auch für kleinere Filialen und eine Weiterleitung der Datenübertragung bis zum Lieferanten möglich.

Die obige Anwendung ist beispielhaft. Besonderen Vorteil hat das angegebene Verfahren, wenn eine Laser-Datei verwendet wird. Die Abfrage erfolgt hier in wesentlich höherer Geschwindigkeit als mit herkömmlichen Speichern.

Tabelle 1

```
10 REM ************************************************
20 REM *                                              *
30 REM * PROGRAMMNAME                  B:XLAG         *
40 REM * PROGRAMMIERER                 RISCHBECK ELMAR *
50 REM * LAGER DATEI                                  *
60 REM * DATUM                         30.10.1984     *
70 REM * VERSION                       1              *
80 REM *                                              *
90 REM ************************************************
100 PRINT CHR$(26)
110 PRINT TAB(20) "      L A G E R   -   D A T E I              "
120 PRINT TAB(20) "      -------------------------"
130 PRINT:PRINT:PRINT
140 PRINT TAB(25) "1.ANLAGE DER LAGER DATEI "
150 PRINT:PRINT
160 PRINT TAB(25) "2.ABFRAGEN DER LAGER DATEI "
170 PRINT:PRINT
180 PRINT TAB(25) "3.LAGER BESTAND"
190 PRINT:PRINT
200 PRINT TAB(25) "4.ENDE DER VERARBEITUNG"
210 PRINT:PRINT:PRINT:PRINT:PRINT:PRINT
220 PRINT TAB(25) "BITTE AUSWAHL ANGEBEN ! ";:INPUT NR
230 ON NR GOTO 1000,2000,3000,4000
1000 REM ******************************************************************
1010 REM LAGER DATEI                                        ANLAGE
1020 REM
1030 PRINT CHR$(26)
1040 OPEN"O",#1,"B:LAG.DAT"
1050 INPUT "ART.-NR.    ENDE=0     ";A
1055 IF A=0 THEN 1120
1060 INPUT "ARTIKEL                 ";B$
1080 INPUT "PREIS                   ";D
1090 INPUT "BESTANDSMENGE           ";E
1100 INPUT "OK            J/N       ";J$
1110 IF J$<>"J" THEN 1050
1120 WRITE#1,A,B$,D,E
1140 IF A<>0 THEN GOTO 1050 ELSE 1150
```

```
1150 CLOSE 1:GOTO 100
2000 REM ******************************************************************
2010 REM LAGER DATEI                                                  ABFRAGE
2020 REM
2030 PRINT CHR$(26)
2040 OPEN"I",#1,"B:LAG.DAT"
2050 INPUT "ART.-NR.                        ";AA
2060 INPUT "ART.-NR.    OK      J/N      ";J$
2070 IF J$="N"  THEN 2050
2080 IF EOF(1) THEN 2120
2090 INPUT#1,A,B$,D,E
2100 IF A=AA THEN 2110 ELSE 2080
2110 PRINT A,B$,D,E
2120 IF AA<>A THEN PRINT:PRINT "UNTER DIESER NUMMER SIND KEINE DATEN ANGELEGT"
2130 INPUT"WOLLEN SIE WEITER ARTIKEL ABFRAGEN  J/N";J$
2140 IF J$="J" THEN CLOSE 1 : GOTO 2040
2145 CLOSE 1:GOTO 100
3000 REM ******************************************************************
3001 REM                                                              LAGERBESTAND
3003 REM
3005 PRINT CHR$(26)
3006 GESUM=0
3010 OPEN"I",#1,"B:LAG.DAT"
3015 Z=A
3100 C=B
3110 INPUT#1,A,B$,D,E
3160 IF A=0 THEN 3190
3170 B=INT(A/1000)
3180 IF B<>C THEN 3190 ELSE 3230
3190 IF Z=0 THEN 3230
3210 LPRINT:LPRINT TAB(10)"WARENGRUPPE";C;TAB(50)USING"######.## DM";SUM
3220 LPRINT
3221 SUM=0
3230 IF A=0 THEN 3270
3240 LPRINT TAB(10)A;TAB(17)B$,TAB(30)USING"#####.## DM";D
3250 SUM=SUM+D*E
3255 GESUM=GESUM+D*E
3260 GOTO 3015
3270 LPRINT:LPRINT TAB(10)"LAGERBSTAND";TAB(50)USING"######.## DM";GESUM
3271 LPRINT
3280 B$=INPUT$(1)
3281 A$=""
3290 CLOSE 1 : GOTO 100
4000 END
```

Tabelle 2A

| | | | | | |
|---|---|---|---|---|---|
| 22410 | STUHL | 30 x | 198.00 DM | 5940.00 DM | |
| 22047 | JH | 40 x | 231.00 DM | 9240.00 DM | |
| 22418 | BANK | 40 x | 88.90 DM | 3556.00 DM | |
| WARENGRUPPE 22 | | | | | 18736.00 DM |
| 47210 | LAMPE | 34 x | 19.80 DM | 673.20 DM | |
| WARENGRUPPE 47 | | | | | 673.20 DM |
| 46470 | STÄNDER | 125 x | 22.31 DM | 2788.75 DM | |
| WARENGRUPPE 46 | | | | | 2788.75 DM |
| -62001 | JHG | -12 x | 139.80 DM | -1677.60 DM | |
| -62307 | DIKETTE | 250 x | 64.80 DM | 16200.00 DM | |
| WARENGRUPPE-62 | | | | | 14522.40 DM |
| 00017 | PLKAT | 20000 x | 0.90 DM | 18000.00 DM | |
| 00027 | SCHALTER | -150 x | 0.23 DM | -34.50 DM | |
| 00082 | STECKER | -200 x | 0.69 DM | -138.00 DM | |
| WARENGRUPPE 0 | | | | | 17827,50 DM |
| 52033 | HEFTER | -70 x | 2.89 DM | -202.30 DM | |
| WARENGRUPPE 52 | | | | | -202.30 DM |
| 54891 | LOCHER | 50 x | 4.48 DM | 224.00 DM | |
| WARENGRUPPE 54 | | | | | 224.00 DM |
| 31031 | KABEL | 17 x | 84.90 DM | 1443.30 DM | |
| WARENGRUPPE 31 | | | | | 1443.30 DM |
| 34275 | BUCHSE | 288 x | 1.99 DM | 573.12 DM | |
| WARENGRUPPE 34 | | | | | 573.12 DM |
| LAGERBESTAND | | | | | 56586.00 DM |

| | | | | | |
|---|---|---|---|---|---|
| WARENGRUPPE 57 | | | | | 0.00 DM |
| 22410 | STUHL | 30 x | 198.00 DM | 5940.00 DM | |
| 22047 | JH | 40 x | 231.00 DM | 9240.00 DM | |
| 22418 | BANK | 40 x | 83.90 DM | 3356.00 DM | |
| WARENGRUPPE 22 | | | | | 18736.00 DM |
| 00017 | PLKAT | 20000 x | 0.90 DM | 18000.00 DM | |
| 00027 | SCHALTER | -150 x | 0.23 DM | -34.50 DM | |
| 00082 | STECKER | -200 x | 0.69 DM | -138.00 DM | |
| WARENGRUPPE 0 | | | | | 17827.50 DM |
| -62001 | JHG | -12 x | 139.80 DM | -1677.60 DM | |
| -62307 | DIKETTE | 250 x | 64.80 DM | 16200.00 DM | |
| WARENGRUPPE-62 | | | | | 14522.40 DM |
| 34275 | BUCHSE | 288 x | 1.99 DM | 573.12 DM | |
| WARENGRUPPE 34 | | | | | 573.12 DM |
| 47210 | LAMPE | 34 x | 19.80 DM | 673.20 DM | |
| WARENGRUPPE 47 | | | | | 673.20 DM |
| WARENGRUPPE-99 | | | | | 0.00 DM |
| SUMME ALLER ABGEFRAGTER WARENGRUPPEN | | | | | 52332.20 DM |

Tabelle 2B

| | | | | | |
|---|---|---|---|---|---|
| 46470 | STANDER | 125 x | 22.31 DM | 2788.75 DM | |
| UMSATZGRUPPE VON 2 000 DM BIS 2 999 | | | | | 2788.75 DM |
| -62307 | DIKETTE | 250 x | 64.80 DM | 16200.00 DM | |
| UMSATZGRUPPE VON 16 000 DM BIS 16 999 | | | | | 16200.00 DM |
| 47210 | LAMPE | 34 x | 19.80 DM | 673.20 DM | |
| 54891 | LOCHER | 50 x | 4.48 DM | 224.00 DM | |
| 34275 | BUCHSE | 288 x | 1.99 DM | 573.12 DM | |
| UMSATZGRUPPE VON 0 000 DM BIS 0 999 | | | | | 1470.32 DM |
| 22418 | BANK | 40 x | 88.90 DM | 3556.00 DM | |
| UMSATZGRUPPE VON 3 000 DM BIS 3 999 | | | | | 3556.00 DM |
| SUMME ALLER ABGEFRAGTER UMSATZGRUPPEN | | | | | 24015.10 DM |

zu Tabelle 2B

| | | | | | |
|---|---|---|---|---|---|
| UMSATZGRUPPE VON-5 000 DM BIS-5 999 | | | | | 0.00 DM |
| -62001 JHG | | -12 x | 139.80 DM | -1677.60 DM | |
| UMSATZGRUPPE VON-1 000 DM BIS-1 999 | | | | | -1677.60 DM |
| UMSATZGRUPPE VON 25 000 DM BIS 25 999 | | | | | 0.00 DM |
| 47210 | LAMPE | 34 x | 19.80 DM | 673.20 DM | |
| 54391 | LOCHER | 50 x | 4.48 DM | 224.00 DM | |
| 34275 | BUCHSE | 288 x | 1.99 DM | 573.12 DM | |
| UMSATZGRUPPE VON 0 000 DM BIS 0 999 | | | | | 1470.32 DM |
| 22047 | JH | 40 x | 231.00 DM | 9240.00 DM | |
| UMSATZGRUPPE VON 9 000 DM BIS 9 999 | | | | | 9240.00 DM |

SUMME ALLER ABGEFRAGTER UMSATZGRUPPEN 9032.72 DM

Tabelle 2

```
10 REM ***********************************************
20 REM *                                             *
30 REM * PROGRAMMNAME               B:XLAG           *
40 REM * PROGRAMMIERER              RISCHBECK ELMAR  *
50 REM * LAGER DATEI                                 *
60 REM * DATUM                      30.10.1984       *
70 REM * VERSION                    1                *
80 REM *                                             *
90 REM ***********************************************
100 PRINT CHR$(26)
110 PRINT TAB(20) "     L A G E R  -  D A T E I
120 PRINT TAB(20) "     -------------------------"
130 PRINT:PRINT:PRINT
140 PRINT TAB(25) "1.ANLAGE DER LAGER DATEI "
150 PRINT:PRINT
160 PRINT TAB(25) "2.ABFRAGEN DER LAGER DATEI "
170 PRINT:PRINT
180 PRINT TAB(25) "3.LAGER BESTAND"
190 PRINT:PRINT
200 PRINT TAB(25) "4.ENDE DER VERARBEITUNG"
210 PRINT:PRINT:PRINT:PRINT:PRINT:PRINT
220 PRINT TAB(25) "BITTE AUSWAHL ANGEBEN ! ";:INPUT NR
230 ON NR GOTO 1000,2000,3000,4000
1000 REM ******************************************************************
1010 REM LAGER DATEI                                         ANLAGE
1020 REM
1030 PRINT CHR$(26)
1040 OPEN"O",#1,"B:LAG.DAT"
1050 INPUT "ART.-NR.    ENDE=0     ";A
1055 IF A=0 THEN 1120
1060 INPUT "ARTIKEL                  ";B$
1080 INPUT "PREIS                    ";D
1090 INPUT "BESTANDSMENGE            ";E
1100 INPUT "OK             J/N       ";J$
1110 IF J$<>"J" THEN 1050
1120 WRITE#1,A,B$,D,E
1140 IF A<>0 THEN GOTO 1050 ELSE 1150
1150 CLOSE 1:GOTO 100
2000 REM ******************************************************************
2010 REM LAGER DATEI                                         ABFRAGE
2020 REM
2030 PRINT CHR$(26)
2040 OPEN"I",#1,"B:LAG.DAT"
2050 INPUT "ART.-NR.                 ";AA
2060 INPUT "ART.-NR.     OK     J/N  ";J$
2070 IF J$="N"  THEN 2050
2080 IF EOF(1) THEN 2120
2090 INPUT#1,A,B$,D,E
2100 IF A=AA THEN 2110 ELSE 2080
2110 PRINT A,B$,D,E
2120 IF AA<>A THEN PRINT:PRINT "UNTER DIESER NUMMER SIND KEINE DATEN ANGELEGT"
2130 INPUT"WOLLEN SIE WEITER ARTIKEL ABFRAGEN  J/N";J$
2140 IF J$="J" THEN CLOSE 1 : GOTO 2040
2145 CLOSE 1:GOTO 100
3000 REM ********************************
```

```
3001 REM                                                  LAGERBESTAND
3003 REM
3005 PRINT CHR$(26)
3006 GESUM=0
3010 OPEN"I",#1,"B:LAG.DAT"
3015 Z=A
3100 C=B
3110 INPUT#1,A,B$,D,E
3160 IF A=0 THEN 3190
3170 B=INT(A/1000)
3180 IF B<>C THEN 3190 ELSE 3230
3190 IF Z=0 THEN 3230
3210 LPRINT:LPRINT TAB(10)"WARENGRUPPE";C;TAB(50)USING"######.## DM";SUM
3220 LPRINT
3221 SUM=0
3230 IF A=0 THEN 3270
3240 LPRINT TAB(10)A;TAB(17)B$,TAB(30)USING"#####.## DM";D
3250 SUM=SUM+D*E
3255 GESUM=GESUM+D*E
3260 GOTO 3015
3270 LPRINT:LPRINT TAB(10)"LAGERBSTAND";TAB(50)USING"######.## DM";GESUM
3271 LPRINT
3280 B$=INPUT$(1)
3281 A$=""
3290 CLOSE 1 : GOTO 100
4000 END
```

Tabelle 4

| | | | |
|---|---|---|---|
| 1.23457E+06 WER | | 453.00 DM | |
| 1.2347E+06 HBGJ | | 2345.00 DM | |
| WARENGRUPPE 1234 | | | %1099350.00 DM |
| 8970 | IUZ | 65.00 DM | |
| 8990 | UZT | 12354.00 DM | |
| WARENGRUPPE 8 | | | 39918.00 DM |
| 20134 | VBC | 56.00 DM | |
| WARENGRUPPE 20 | | | 4256.00 DM |
| 21456 | GCF | 876.00 DM | |
| 21500 | JH | 54.00 DM | |
| WARENGRUPPE 21 | | | 6690.00 DM |
| 45 | GH | 342.00 DM | |
| 234 | 67 | 12.00 DM | |
| 567 | TRZ | 234.00 DM | |
| WARENGRUPPE 0 | | | 5382.00 DM |
| 17009 | HG | 35.00 DM | |
| 17050 | NH | 34.00 DM | |
| WARENGRUPPE 17 | | | 1111.00 DM |
| LAGERBSTAND | | | %1156710.00 DM |

Tabelle 5

| | | |
|---|---|---|
| 22410 Stuhl | 30 x | 198,00 DM |
| 22047 JH | 40 x | 231,00 DM |
| 22418 Bank | 40 x | 88,90 DM |
| 47210 Lampe | 34 x | 19,80 DM |
| 46470 Ständer | 125 x | 22,31 DM |
| -62001 JHG | -12 x | 139,80 DM |
| -62307 Diskette | 250 x | 64,80 DM |
| 00017 Plakat | 20000 x | 0,90 DM |
| 00027 Schalter | -150 x | 0,23 DM |
| 00082 Stecker | -200 x | 0,69 DM |
| 52033 Hefter | -70 x | 2,89 DM |
| 54891 Locher | 50 x | 4,48 DM |
| 31031 Kabel | 17 x | 84,90 DM |
| 34275 Buchse | 288 x | 1,99 DM |

**Patentansprüche**

1. Verfahren zum Anlegen und Abfragen von Informationsgruppen im Speicher einer Rechenanlage mit einem Leitwerk, einem Speicher und einem Rechenwerk mit den Merkmalen:
    - die Elemente einer jeden Gruppe werden hintereinander in einer sequentiellen Datei abgelegt,
    - die Gruppen innerhalb der sequentiellen Datei bleiben ungeordnet,
    - die Abfrage nach den Elementen aller Gruppen erfolgt in einem Durchgang durch die sequentielle Datei, wobei jeder Gruppenwechsel die Ausgabe einer neuen Gruppe einleitet,

    gekennzeichnet durch den Verfahrensschritt,

    daß zur Kennzeichnung einer Gruppe der ganzzahlige Teil des Quotienten aus dem numerischen Feld und einem frei wählbaren Divisor verwendet wird.

2. Verfahren nach Anspruch 1, dadurch gekennzeichnet,

    daß alle Elemente einer Gruppe kontinuierlich aneinander anschließen.

3. Verfahren nach Anspruch 1 oder 2, dadurch gekennzeichnet,

    daß zur Kennzeichnung der Elemente einer Gruppe Zahlen verwendet werden, die aus gleichstelligen Ziffern eines Feldes in jedem Datensatz der sequentiellen Datei abgeleitet sind.

4. Verfahren nach Anspruch 3, dadurch gekennzeichnet,

    daß positive und negative Zahlen zur Kennzeichnung der Gruppen dienen.

5. Verfahren nach Anspruch 4, dadurch gekennzeichnet,

    daß das Vorzeichen des Ziffernfeldes in jedem Datensatz der sequentiellen Datei geprüft wird.

6. Verfahren nach Anspruch 3, dadurch gekennzeichnet,

    daß nur positive Ziffernfelder in jedem Datensatz der sequentiellen Datei verwendet werden.

7. Verfahren nach einem der Ansprüche 3 bis 6, dadurch gekennzeichnet,

    daß als Ziffernfeld der EAN-Warencode verwendet wird.

8. Verfahren nach einem der Ansprüche 1 bis 7, dadurch gekennzeichnet,

    daß bei jedem Gruppenwechsel eine Endzeile mit aufgelaufenen Werten für die Gruppe ausgegeben wird.

9. Verfahren nach einem der Ansprüche 1 bis 8, dadurch gekennzeichnet,

    daß der Zugriff auf die Datei durch Auslesen einer optischen Bildplatte durchgeführt wird.

**Claims**

1. Method for storing and reading groups of information from a memory of a computer, comprising a control system, a memory and a processor with the following features,
    - elements of each groop are sorted one ofter the other in a sequential data set,
    - said groops contained in the sequential data set are unsorted,
    - read out of the elements in all groops is performed in a run through the sequential data set, wherein each change of a group initiates the output of a new group,

    wherein the methode is

    **characterized in**
    - that the integer number of the quotient of the numerical field and a free choosable divisor serves as identifier for that groop.

**2.** Method according to claim 1, **characterized in,** that all elements of a groop chain continously.

**3.** Method according to claim 1 or 2, **characterized in,** that numbers serve as identifiers for the elements of a groop, wherein the numbers are generated from a cipher code with equal number of ciphers in each data set of the sequential data set.

**4.** Method according to claim 3, **characterized in,** that positive and negative numbers serve for the identification of groops.

**5.** Method according to claim 4, **characterized in,** that the sign of the cipher field is tested in every data set of the sequential data set.

**6.** Method according to claim 3, **characterized in,** that only positive cipher fields are used in every data set of the sequential data set.

**7.** Method according to claims 3 to 6, **characterized in,** that the EAN-Trade-Code is used for the cipher field.

**8.** Method according to anyone of claims 1 to 7, **characterized in,** that before each change of the groop an endline is output, that contains accumulated values of the groop.

**9.** Method according to anyone of claims 1 to 8, **characterized in,** that access to the data set is provided by readout of an optical disc.

**Revendications**

**1.** Procédé d'écriture et de lecture de groupes d'information dans une mémoire d'une installation d'ordinateur avec une unité de commande, une mémoire et une unité de calcul avec les caractéristiques :

- les éléments de chaque groupe sont écrits l'un après l'autre dans un fichier séquentiel,
- les groupes au sein du fichier séquentiel restent sans ordonnancement,
- la lecture des éléments de tous les groupes est effectuée par un passage à travers le fichier séquentiel, chaque changement de groupes introduisant l'édition d'un nouveau groupe,

caractérisé par l'étape de procédé

de savoir que pour l'identification d'un groupe, la partie en nombre entier du quotient de la zone numérique et d'un diviseur pouvant être choisi librement est utilisée.

**2.** Procédé selon la revendication 1, caractérisé en ce que tous les éléments d'un groupe se succèdent l'un après l'autre de manière continue.

**3.** Procédé selon les revendications 1 ou 2, caractérisé en ce que, pour l'identification des éléments d'un groupe, des chiffres sont utilisés qui sont dérivés des chiffres à mêmes positions d'une zone dans chaque jeu de données du fichier séquentiel.

**4.** Procédé selon la revendication 3, caractérisé en ce que des chiffres positifs et négatifs servent à l'identification des groupes.

**5.** Procédé selon la revendication 4, caractérisé en ce que le signe de la zone de chiffres est vérifié dans chaque jeu de données du fichier séquentiel.

**6.** Procédé selon la revendication 3, caractérisé en ce que seuls des zones de chiffres positifs sont utilisées dans chaque jeu de données du fichier séquentiel.

7. Procédé selon l'une des revendications 3 à 6, caractérisé en ce que la zone de chiffres utilise le code de marchandises EAN.

8. Procédé selon l'une des revendications 1 à 7, caractérisé en ce qu'à chaque changement de groupes, une ligne terminale est éditée avec les valeurs accumulées pour le groupe.

9. Procédé selon l'une des revendications 1 à 8, caractérisé en ce que l'accès au fichier est effectué par la lecture d'un disque vidéo optique.

FIG. 1A

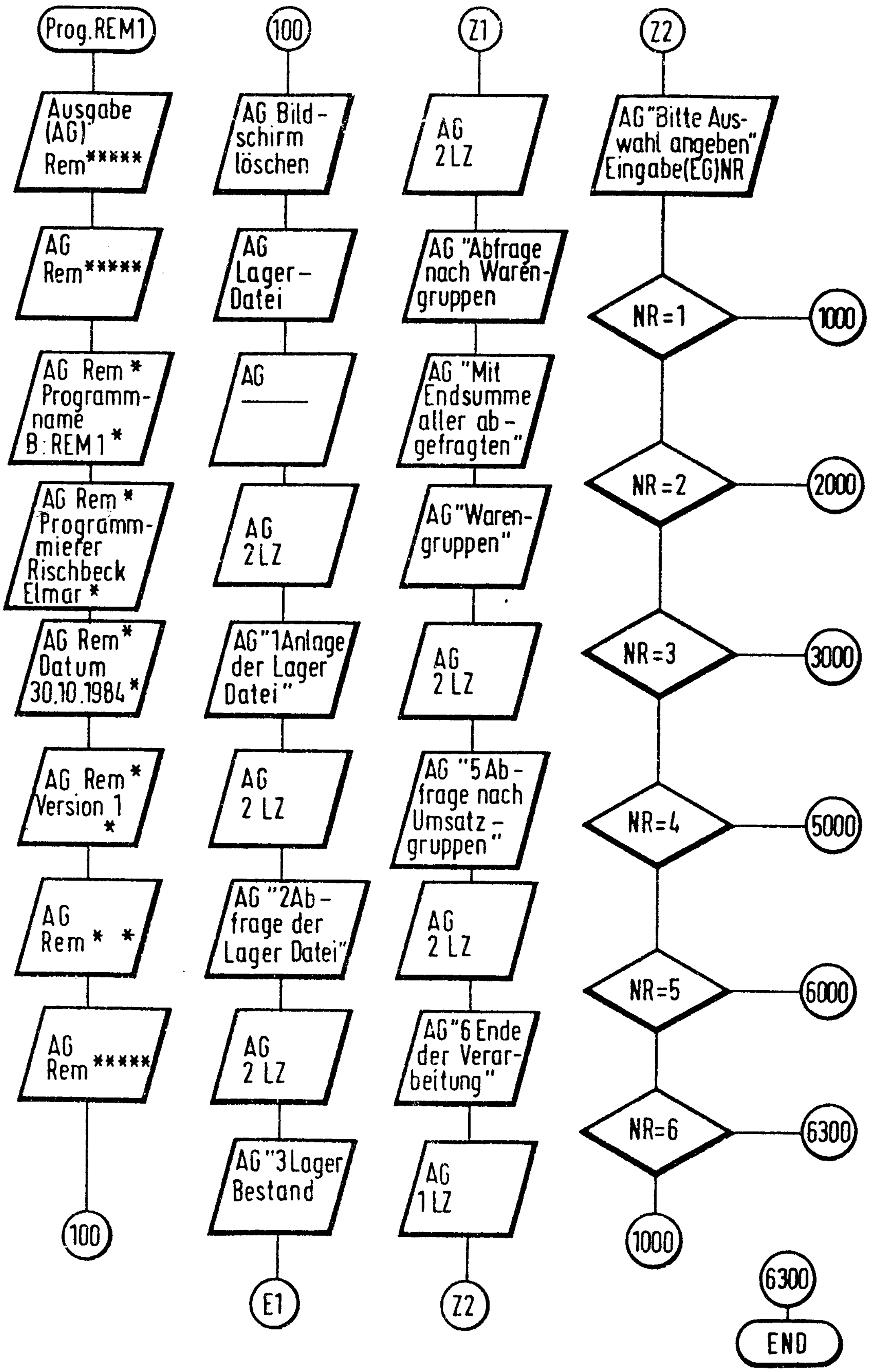
Prog.REM1
Ausgabe (AG) Rem*****
AG Rem*****
AG Rem * Programmname B:REM1 *
AG Rem * Programmierer Rischbeck Elmar *
AG Rem* Datum 30.10.1984 *
AG Rem* Version 1 *
AG Rem * *
AG Rem*****
100
100
AG Bildschirm löschen
AG Lager-Datei
AG
AG 2LZ
AG "1Anlage der Lager Datei"
AG 2 LZ
AG "2Abfrage der Lager Datei"
AG 2 LZ
AG "3Lager Bestand
E1
Z1
AG 2LZ
AG "Abfrage nach Waren-gruppen
AG "Mit Endsumme aller abgefragten"
AG "Waren-gruppen"
AG 2 LZ
AG "5Abfrage nach Umsatz-gruppen"
AG 2 LZ
AG "6 Ende der Verarbeitung"
AG 1LZ
Z2
Z2
AG "Bitte Auswahl angeben" Eingabe(EG)NR
NR=1
1000
NR=2
2000
NR=3
3000
NR=4
5000
NR=5
6000
NR=6
6300
1000
6300
END

FIG. 1B

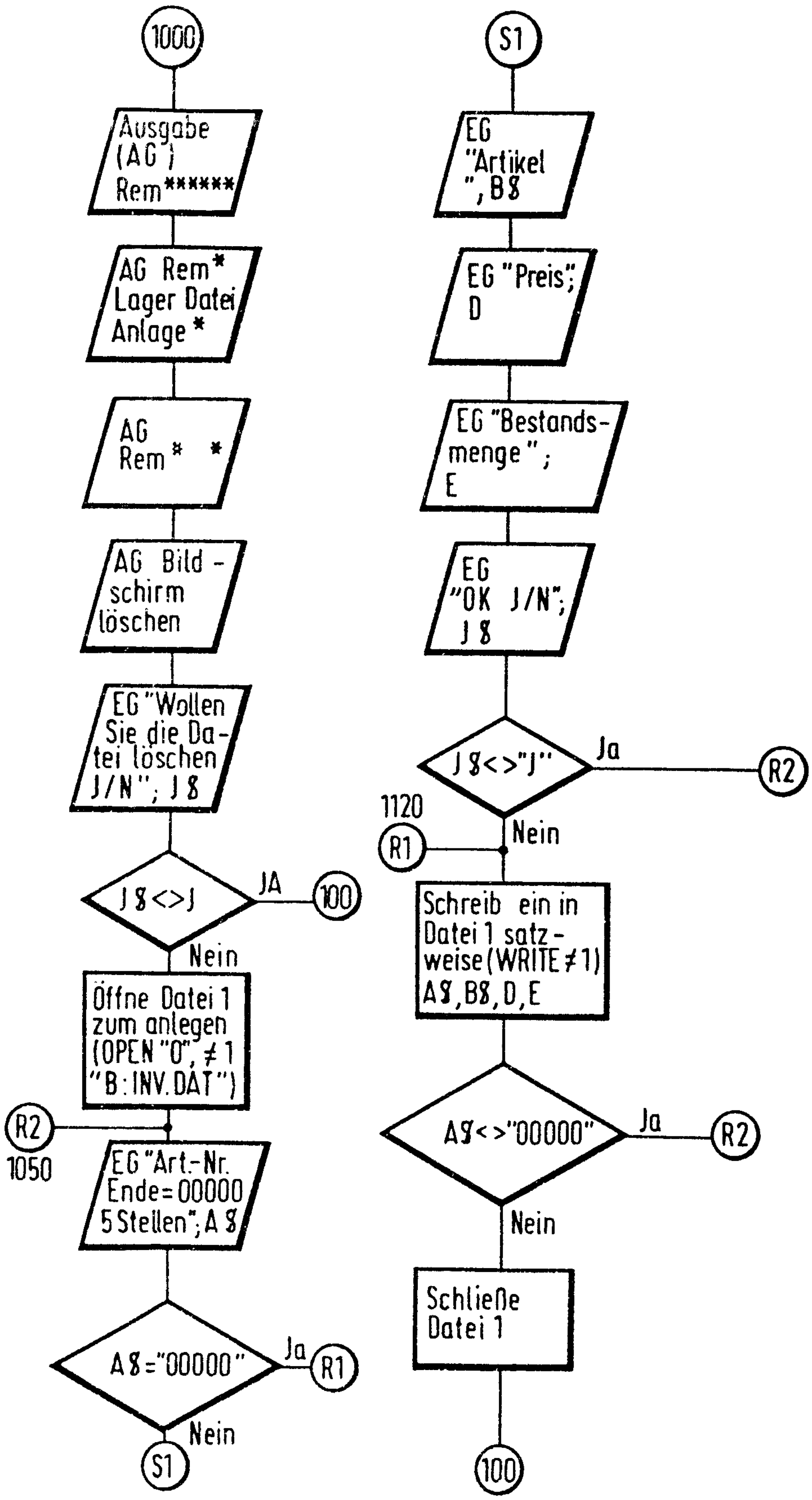
1000
Ausgabe (AG) Rem******
AG Rem* Lager Datei Anlage *
AG Rem * *
AG Bild - schirm löschen
EG "Wollen Sie die Da- tei löschen J/N"; J$
J$<>J
JA
100
Nein
Öffne Datei 1 zum anlegen (OPEN "O", ≠1 "B:INV.DAT")
R2
1050
EG "Art.-Nr. Ende=00000 5 Stellen"; A$
A$="00000"
Ja
R1
Nein
S1
S1
EG "Artikel ", B$
EG "Preis"; D
EG "Bestands- menge"; E
EG "OK J/N"; J$
J$<>"J"
Ja
R2
1120
R1
Nein
Schreib ein in Datei 1 satz- weise (WRITE ≠1) A$, B$, D, E
A$<>"00000"
Ja
R2
Nein
Schließe Datei 1
100

FIG . 1C

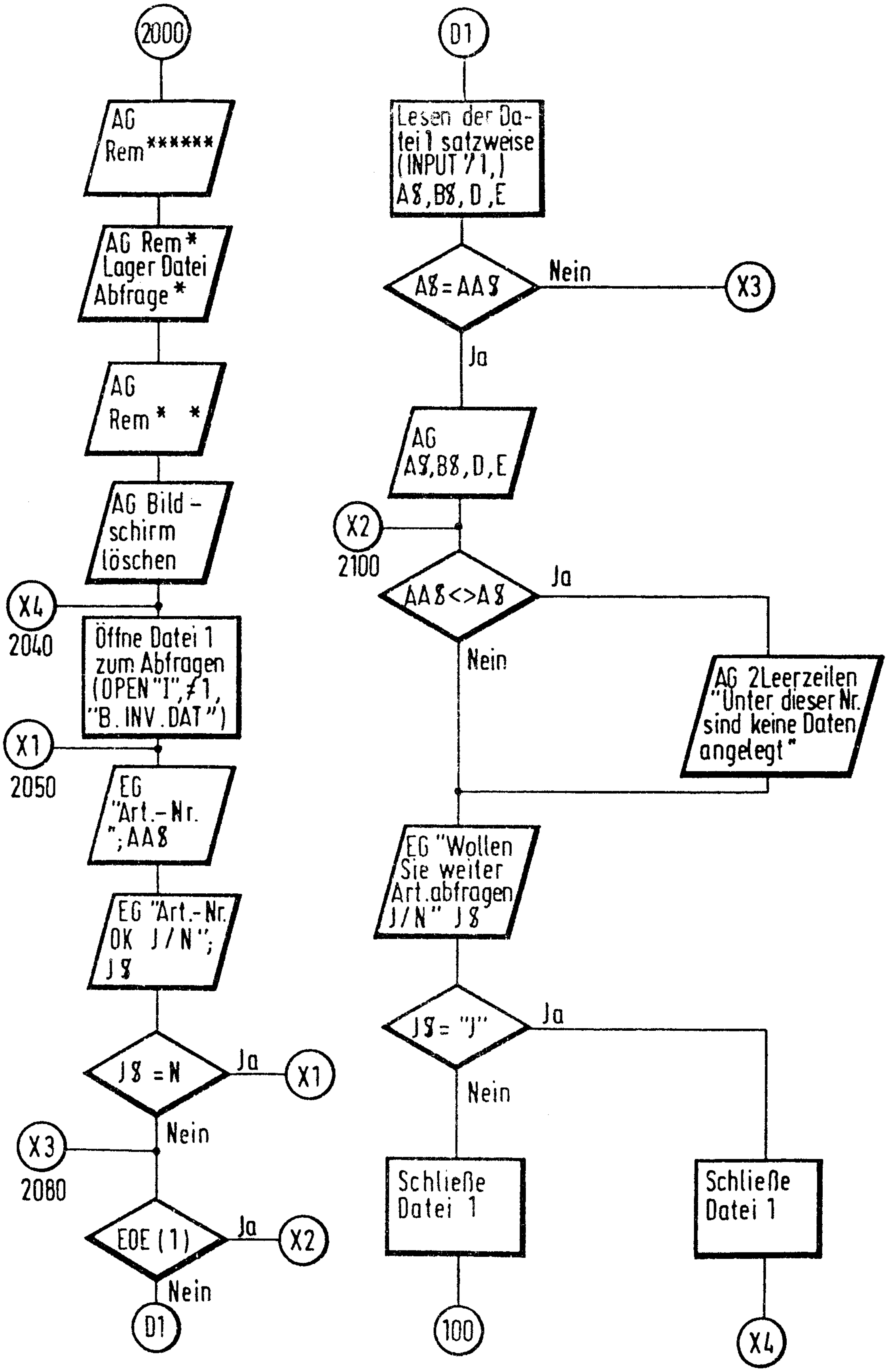
2000
AG Rem******
AG Rem* Lager Datei Abfrage*
AG Rem* *
AG Bild-schirm löschen
X4
2040
Öffne Datei 1 zum Abfragen (OPEN "I",#1, "B.INV.DAT")
X1
2050
EG "Art.-Nr. ";AA$
EG "Art.-Nr. OK J/N"; J$
J$ =N
Ja
X1
Nein
X3
2080
EOE (1)
Ja
X2
Nein
D1
D1
Lesen der Datei 1 satzweise (INPUT #1,) A$,B$,D,E
A$=AA$
Nein
X3
Ja
AG A$,B$,D,E
X2
2100
AA$<>A$
Ja
Nein
AG 2Leerzeilen "Unter dieser Nr. sind keine Daten angelegt"
EG "Wollen Sie weiter Art.abfragen J/N" J$
J$= "J"
Ja
Nein
Schließe Datei 1
Schließe Datei 1
100
X4

FIG.1D

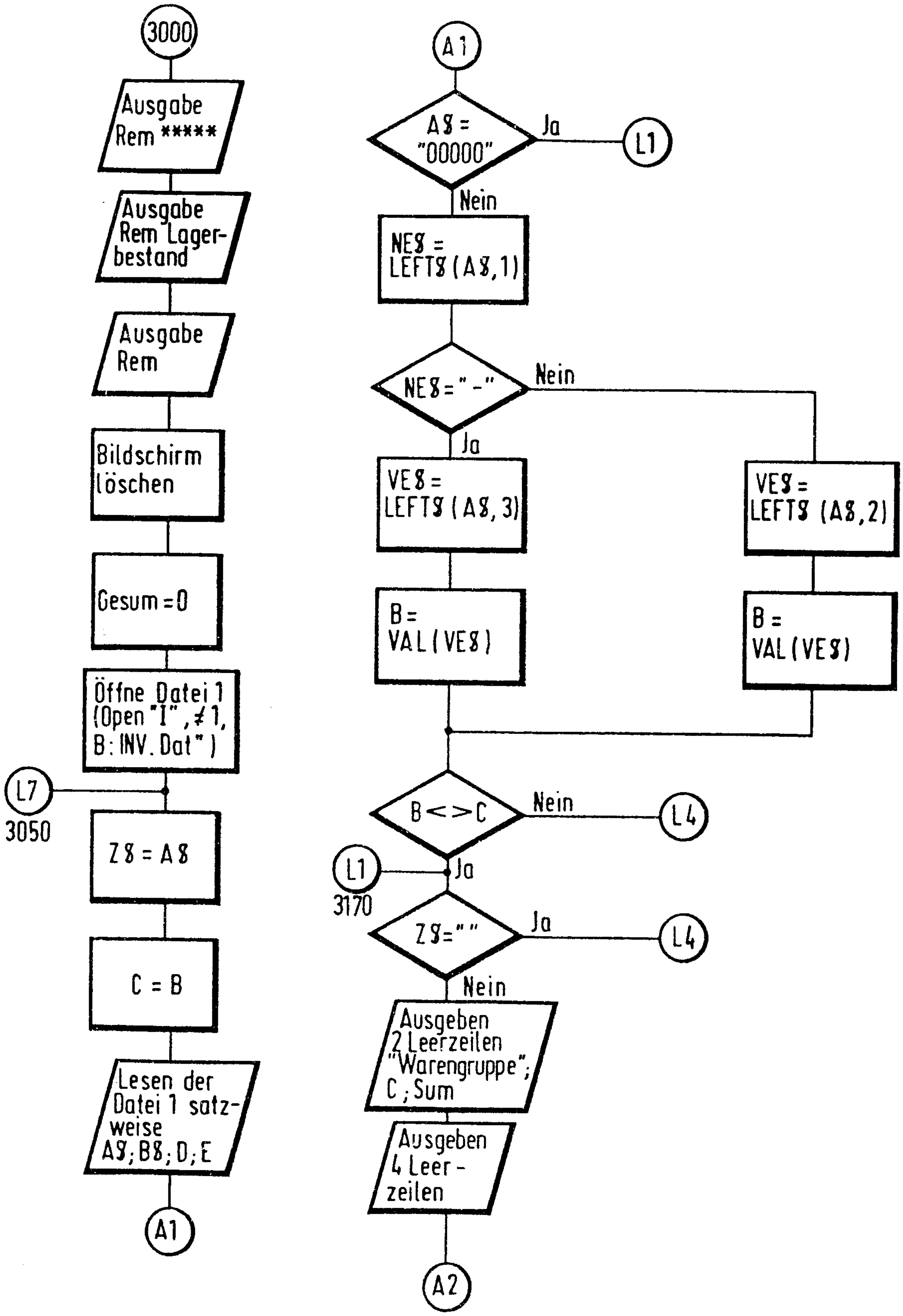
3000
Ausgabe Rem *****
Ausgabe Rem Lagerbestand
Ausgabe Rem
Bildschirm löschen
Gesum = 0
Öffne Datei 1 (Open "I", ≠1, B: INV. Dat")
L7
3050
Z$ = A$
C = B
Lesen der Datei 1 satzweise A$; B$; D; E
A1
A1
A$ = "00000"
Ja
L1
Nein
NE$ = LEFT$ (A$,1)
NE$ = "-"
Nein
Ja
VE$ = LEFT$ (A$, 3)
VE$ = LEFT$ (A$,2)
B = VAL (VE$)
B = VAL (VE$)
B <> C
Nein
L4
L1
3170
Ja
Z$ = ""
Ja
L4
Nein
Ausgeben 2 Leerzeilen "Warengruppe"; C ; Sum
Ausgeben 4 Leerzeilen
A2

FIG.1E

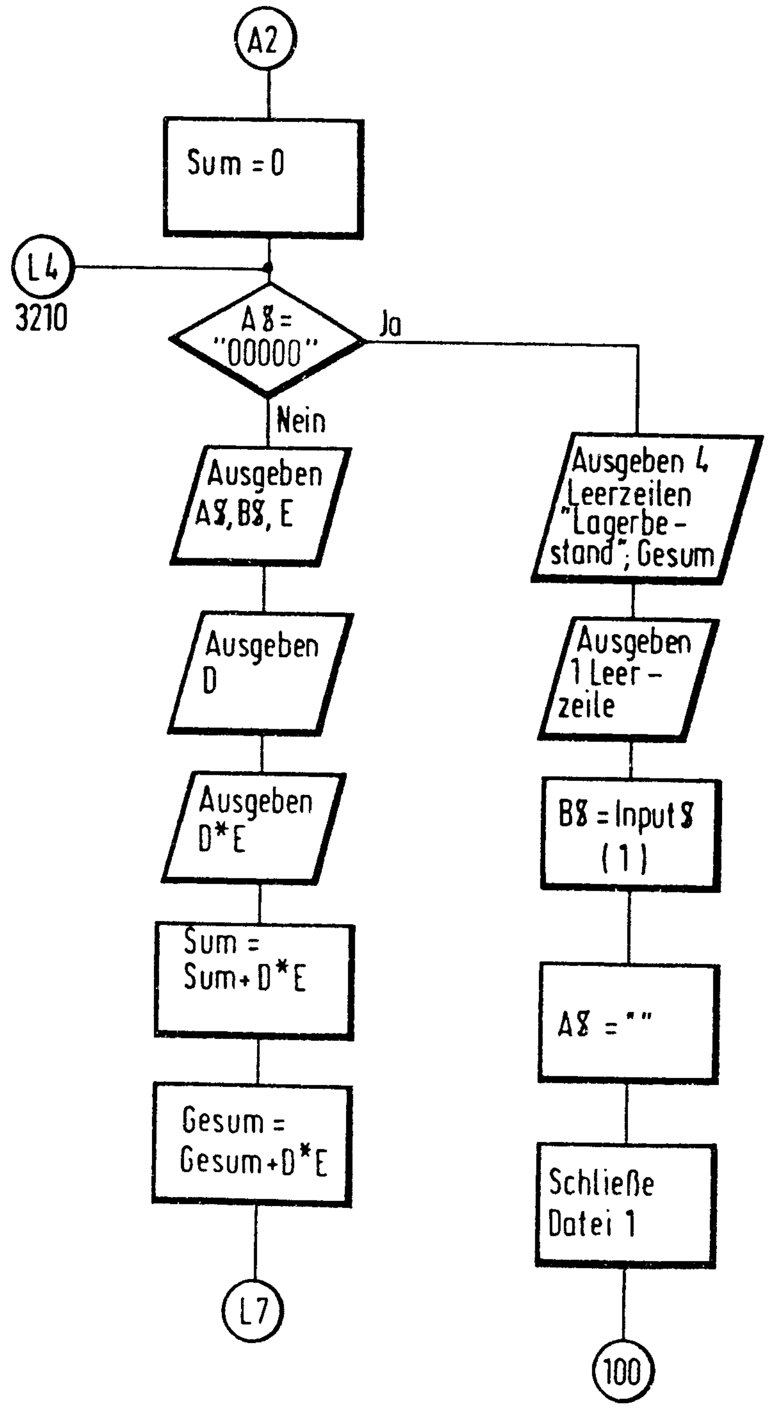
A2
Sum = 0
L4
3210
A$ = "00000"
Ja
Nein
Ausgeben A$, B$, E
Ausgeben D
Ausgeben D*E
Sum = Sum+D*E
Gesum = Gesum+D*E
L7
Ausgeben 4 Leerzeilen "Lagerbe-stand"; Gesum
Ausgeben 1 Leer-zeile
B$ = Input$ (1)
A$ = ""
Schließe Datei 1
100

FIG.1F

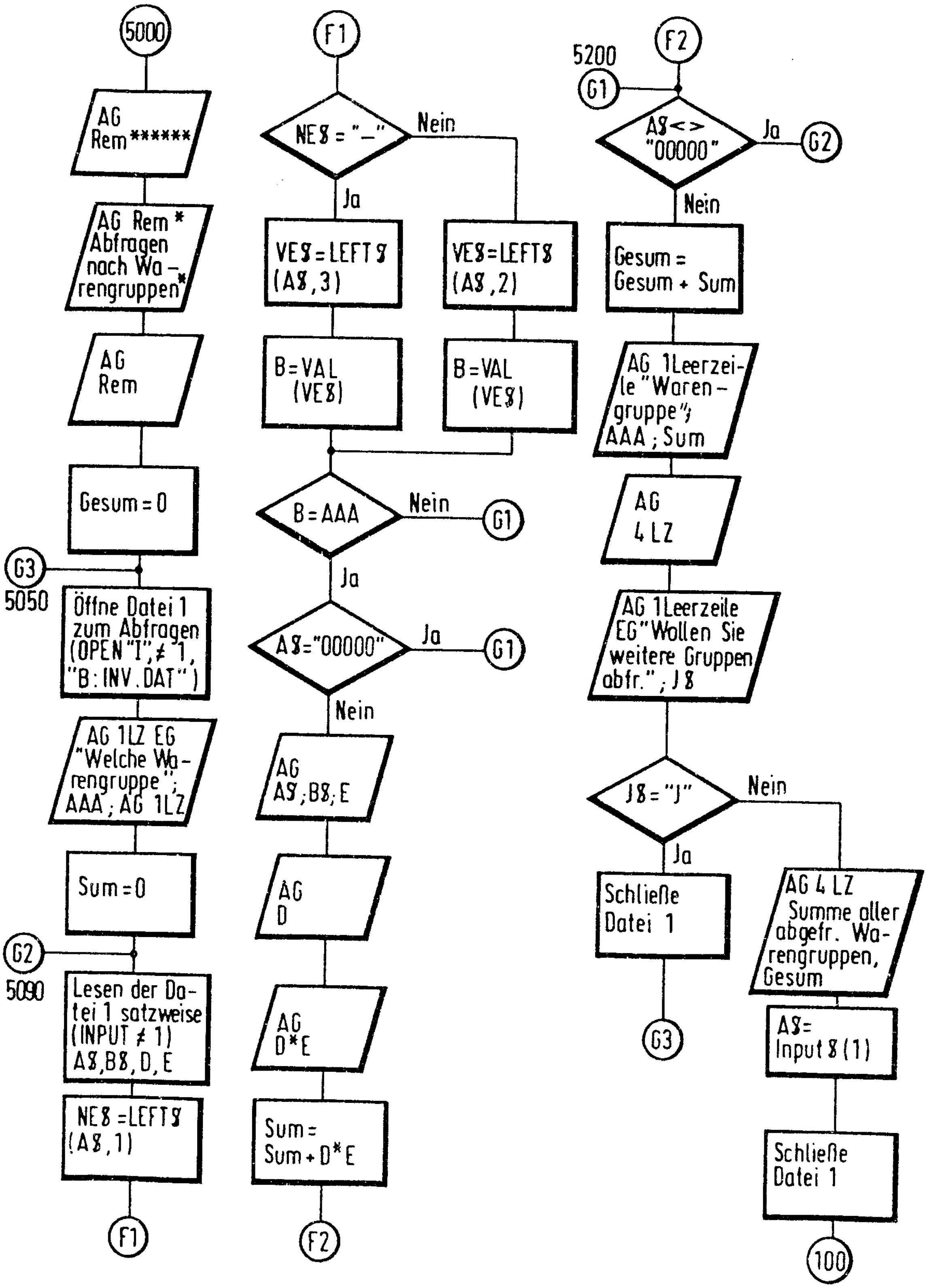
5000
AG Rem******
AG Rem* Abfragen nach Warengruppen*
AG Rem
Gesum=0
G3
5050
Öffne Datei 1 zum Abfragen (OPEN"I",≠1, "B:INV.DAT")
AG 1LZ EG "Welche Warengruppe"; AAA; AG 1LZ
Sum=0
G2
5090
Lesen der Datei 1 satzweise (INPUT ≠ 1) A$,B$,D,E
NE$ =LEFT$ (A$,1)
F1
F1
NE$ = "–"
Nein
Ja
VE$=LEFT$ (A$,3)
VE$=LEFT$ (A$,2)
B=VAL (VE$)
B=VAL (VE$)
B=AAA
Nein
G1
Ja
A$="00000"
Ja
G1
Nein
AG A$;B$;E
AG D
AG D*E
Sum= Sum+D*E
F2
F2
5200
G1
A$<> "00000"
Ja
G2
Nein
Gesum = Gesum + Sum
AG 1Leerzeile "Warengruppe"; AAA; Sum
AG 4LZ
AG 1Leerzeile EG"Wollen Sie weitere Gruppen abfr."; J$
J$="J"
Nein
Ja
Schließe Datei 1
G3
AG 4 LZ Summe aller abgefr. Warengruppen, Gesum
A$= Input$(1)
Schließe Datei 1
100

FIG. 1G

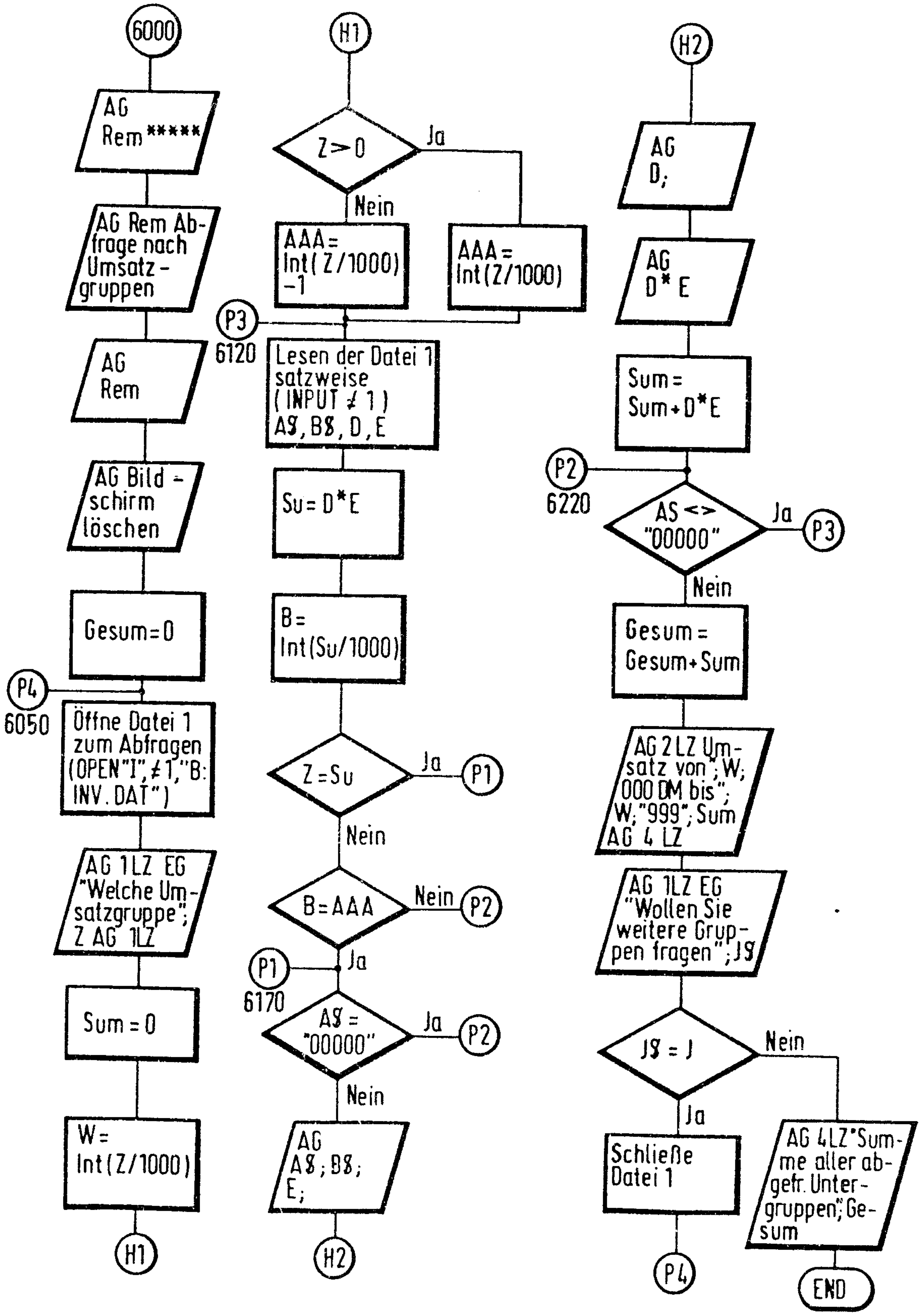
6000
AG Rem*****
AG Rem Abfrage nach Umsatzgruppen
AG Rem
AG Bildschirm löschen
Gesum=0
P4
6050
Öffne Datei 1 zum Abfragen (OPEN"I",≠1,"B:INV.DAT")
AG 1LZ EG "Welche Umsatzgruppe"; Z AG 1LZ
Sum=0
W=Int(Z/1000)
H1
H1
Z>0
Ja
Nein
AAA=Int(Z/1000)-1
AAA=Int(Z/1000)
P3
6120
Lesen der Datei 1 satzweise (INPUT ≠ 1) A$, B$, D, E
Su=D*E
B=Int(Su/1000)
Z=Su
Ja
P1
Nein
B=AAA
Nein
P2
Ja
P1
6170
A$="00000"
Ja
P2
Nein
AG A$;B$; E;
H2
H2
AG D;
AG D*E
Sum=Sum+D*E
P2
6220
AS<>"00000"
Ja
P3
Nein
Gesum=Gesum+Sum
AG 2LZ "Umsatz von";W;"000 DM bis";W;"999";Sum AG 4LZ
AG 1LZ EG "Wollen Sie weitere Gruppen fragen";J$
J$=J
Nein
Ja
Schließe Datei 1
P4
AG 4LZ "Summe aller abgefr. Untergruppen";Gesum
END

FIG.2A

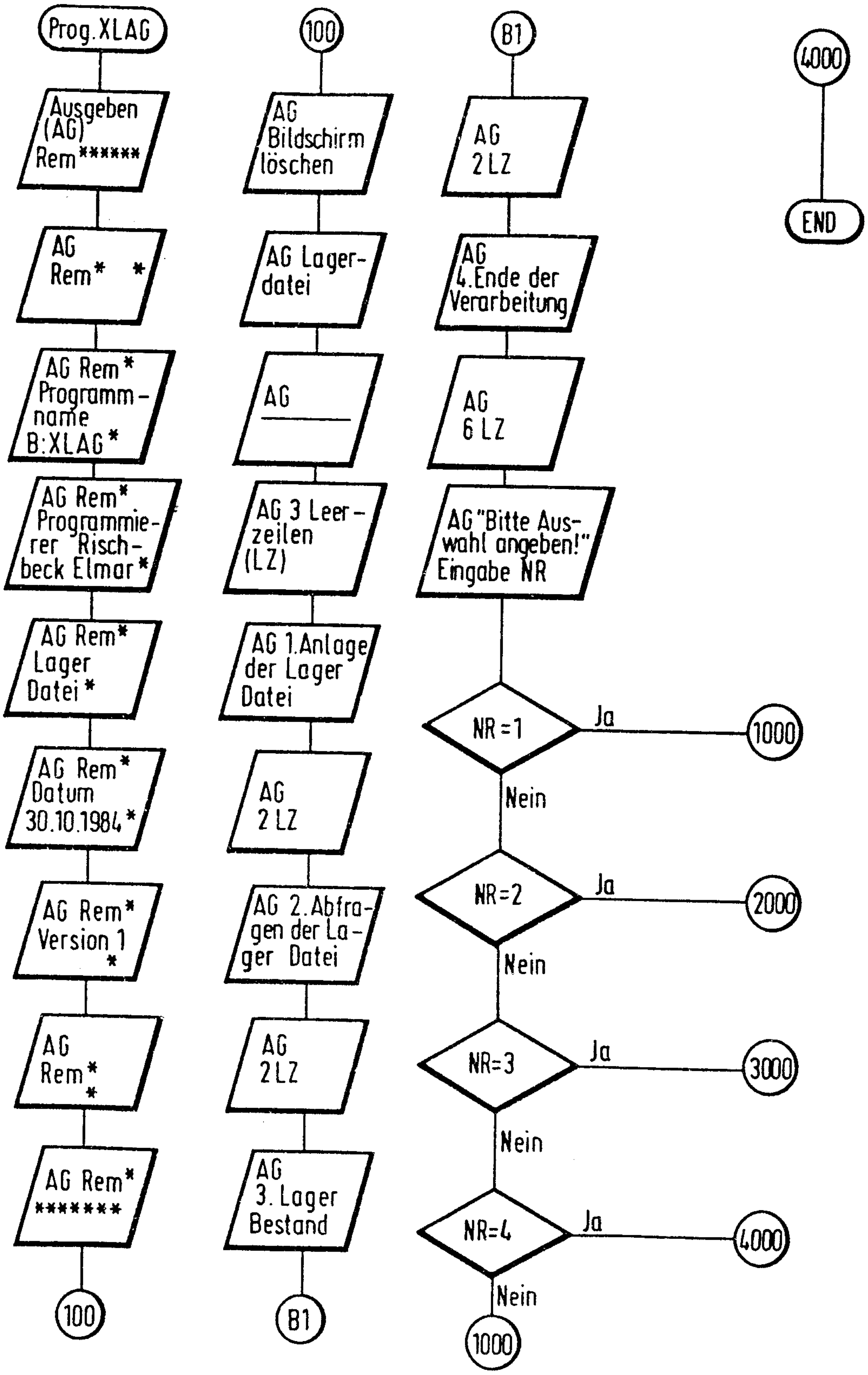
Prog.XLAG
Ausgeben (AG) Rem******
AG Rem* *
AG Rem* Programm-name B:XLAG*
AG Rem* Programmie-rer "Risch-beck Elmar*
AG Rem* Lager Datei*
AG Rem* Datum 30.10.1984*
AG Rem* Version 1 *
AG Rem* *
AG Rem* *******
100
100
AG Bildschirm löschen
AG Lager-datei
AG ______
AG 3 Leer-zeilen (LZ)
AG 1.Anlage der Lager Datei
AG 2 LZ
AG 2.Abfra-gen der La-ger Datei
AG 2 LZ
AG 3. Lager Bestand
B1
B1
AG 2 LZ
AG 4.Ende der Verarbeitung
AG 6 LZ
AG "Bitte Aus-wahl angeben!" Eingabe NR
NR=1
Ja
1000
Nein
NR=2
Ja
2000
Nein
NR=3
Ja
3000
Nein
NR=4
Ja
4000
Nein
1000
4000
END

FIG. 2B

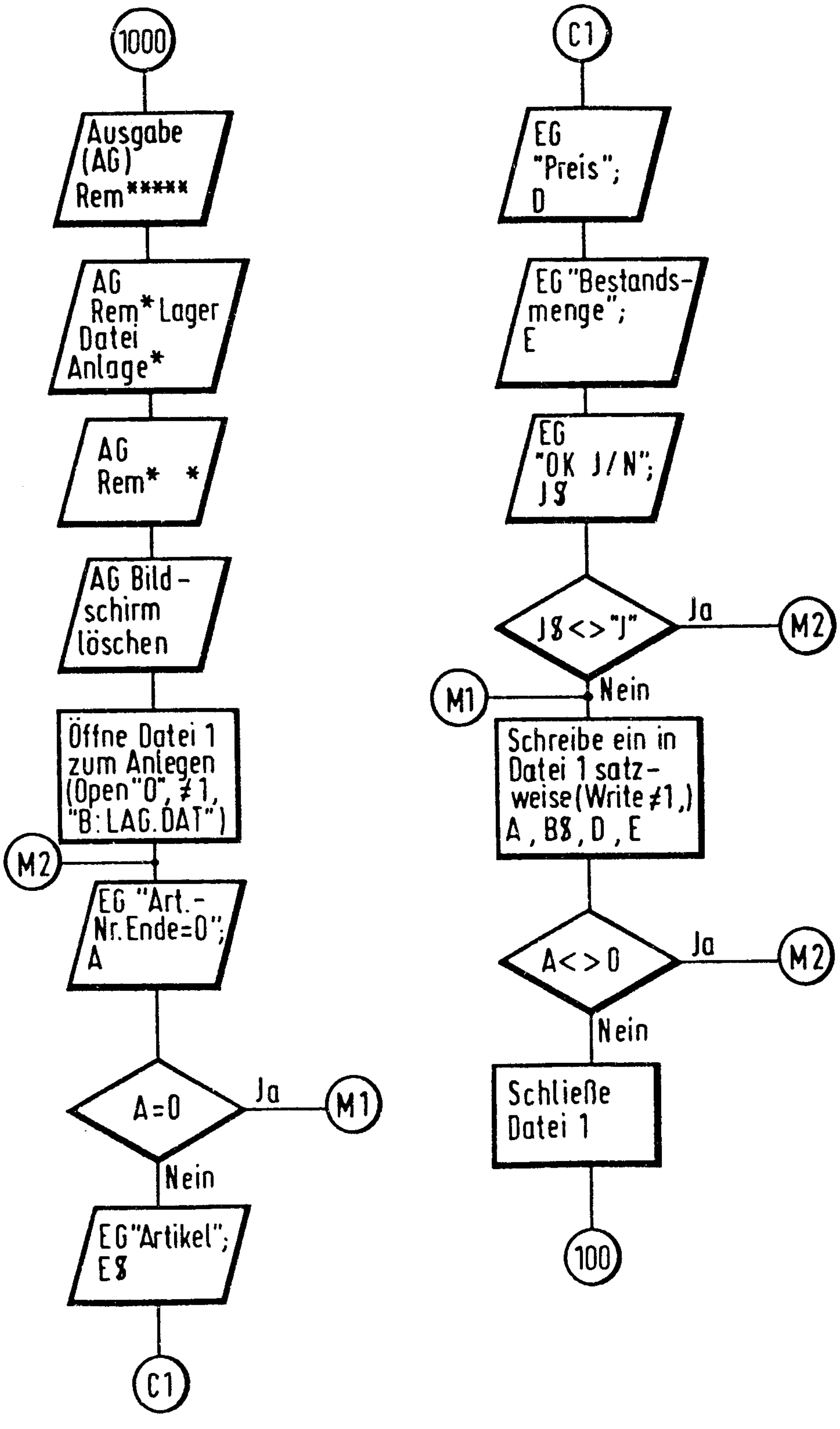
1000
Ausgabe (AG) Rem*****
AG Rem* Lager Datei Anlage*
AG Rem* *
AG Bild-schirm löschen
Öffne Datei 1 zum Anlegen (Open"O", ≠1, "B: LAG.DAT")
M2
EG "Art.-Nr. Ende=0"; A
A=0
Ja
M1
Nein
EG"Artikel"; E$
C1
C1
EG "Preis"; D
EG "Bestands-menge"; E
EG "OK J/N"; J$
J$<>"J"
Ja
M2
M1
Nein
Schreibe ein in Datei 1 satz-weise (Write ≠1,) A, B$, D, E
A<>0
Ja
M2
Nein
Schließe Datei 1
100

FIG.2C

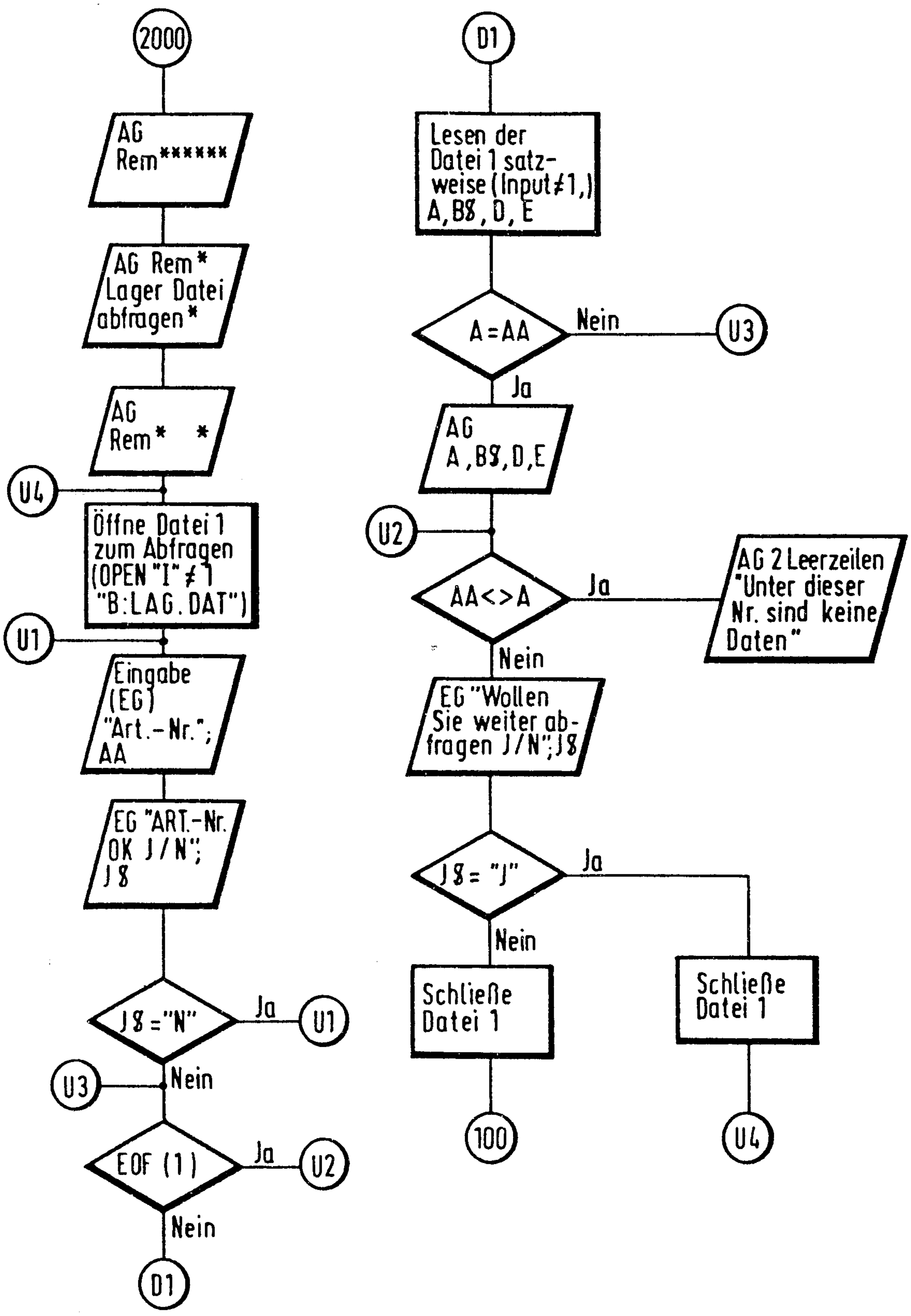
2000
AG Rem******
AG Rem* Lager Datei abfragen*
AG Rem* *
U4
Öffne Datei 1 zum Abfragen (OPEN "I" ≠ 1 "B:LAG.DAT")
U1
Eingabe (EG) "Art.-Nr."; AA
EG "ART.-Nr. OK J/N"; J$
J$ = "N"
Ja
U1
Nein
U3
EOF (1)
Ja
U2
Nein
D1
D1
Lesen der Datei 1 satzweise (Input ≠ 1,) A, B$, D, E
A = AA
Nein
U3
Ja
AG A, B$, D, E
U2
AA <> A
Ja
AG 2 Leerzeilen "Unter dieser Nr. sind keine Daten"
Nein
EG "Wollen Sie weiter abfragen J/N"; J$
J$ = "J"
Ja
Nein
Schließe Datei 1
Schließe Datei 1
100
U4

FIG. 2D

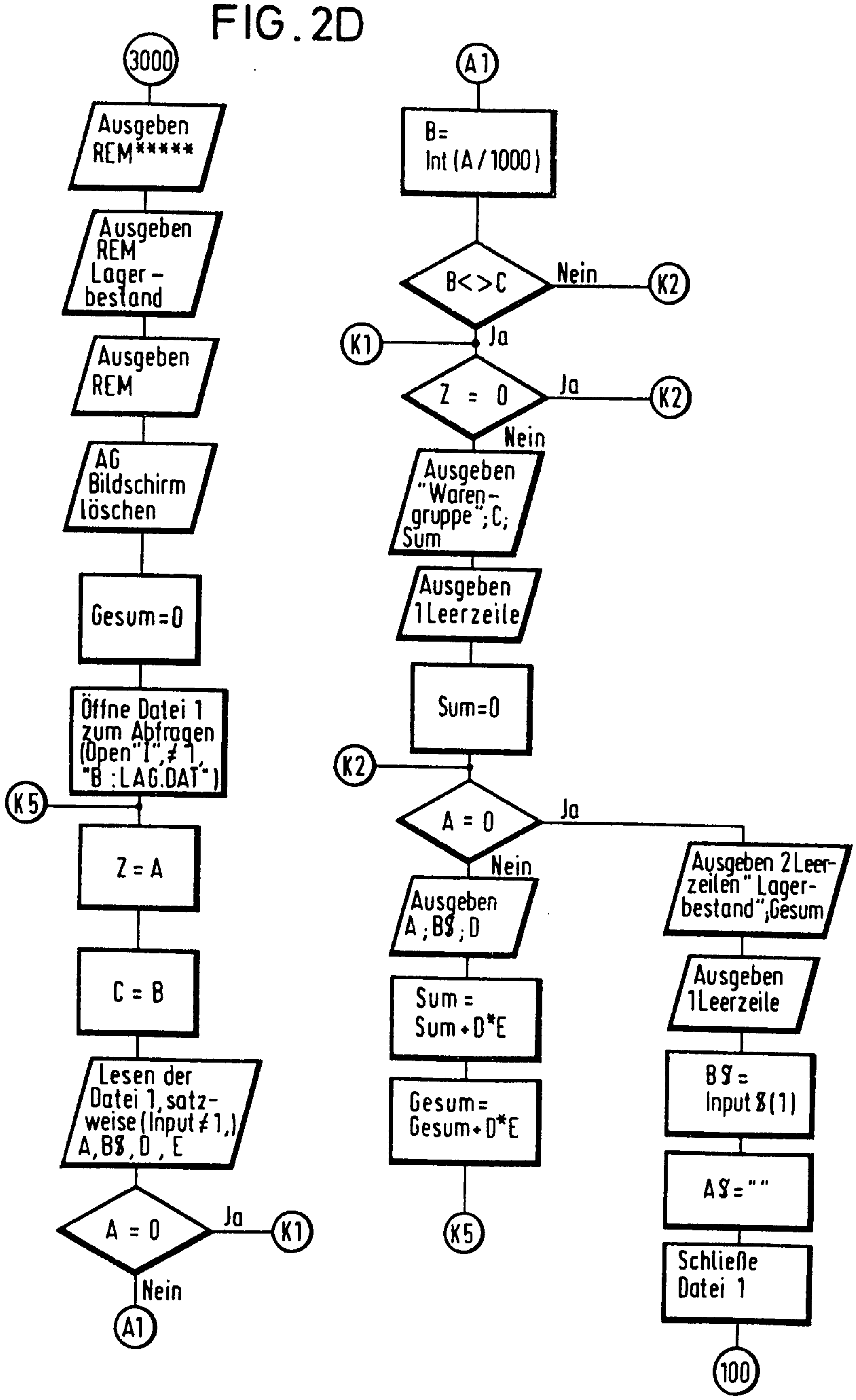
3000
Ausgeben REM*****
Ausgeben REM Lager-bestand
Ausgeben REM
AG Bildschirm löschen
Gesum=0
Öffne Datei 1 zum Abfragen (Open"I",≠1, "B :LAG.DAT")
K5
Z = A
C = B
Lesen der Datei 1, satzweise (Input ≠ 1,) A,B$, D , E
A = 0
Ja
K1
Nein
A1
A1
B= Int (A / 1000)
B<>C
Nein
K2
K1
Ja
Z = 0
Ja
K2
Nein
Ausgeben "Waren-gruppe";C; Sum
Ausgeben 1 Leerzeile
Sum=0
K2
A = 0
Ja
Nein
Ausgeben A ; B$ ; D
Sum = Sum + D*E
Gesum = Gesum + D*E
K5
Ausgeben 2 Leerzeilen " Lager-bestand";Gesum
Ausgeben 1 Leerzeile
B$ = Input $ (1)
A$ = " "
Schließe Datei 1
100